# EUROPEAN PATENT SPECIFICATION

(11) **EP 3 691 231 B1**
(45) Date of publication and mention of the grant of the patent: **18.10.2023**
(21) Application number: 20153791.7
(22) Date of filing: 27.01.2020
(51) Int. Cl.: H04M 1/02, H04R 1/02, F21L 4/04, F21V 21/088, F21V 23/00, F21Y 105/10

(54) **FUNCTION MODULE**
FUNKTIONSMODUL
MODULE DE FONCTIONNEMENT

(30) Priority: 01.02.2019 CN 201920182745 U
(43) Date of publication of application: 05.08.2020
(73) Proprietor: Panasonic Intellectual Property Management Co., Ltd., Osaka-shi, Osaka 540-6207 (JP)
(72) Inventor: TAKEYAMA, Atsushi, Shanghai, Shanghai 201613 (CN); NIU, Zuoduo, Shanghai, Shanghai 201613 (CN); YUASA, Hidekazu, Osaka-shi, Osaka 540-6207 (JP)
(74) Representative: Müller-Boré & Partner Patentanwälte PartG mbB

(56) References cited:
- EP-A1- 1 455 505
- EP-A2- 1 617 138
- WO-A2-2010/064855
- US-A1- 2017 130 912
- US-B1- 7 591 572

## Description

### Technical Field

The present disclosure generally relates to function modules, and specifically, to a function module including a function housing having a functioning section as an illuminator or a loudspeaker.

### Background Art

Patent Literature 1 (JP 2018-037238 A) describes a lighting device. In the lighting device, a plurality of hinge devices couple a plurality of light source units to a base such that the plurality of light source units are rotatable around first axes. Each of the plurality of light source units is rotatable between a first position and a second position around a corresponding first axis of the first axes. To the base, a battery pack configured to supply electric power to the light source units is detachably attached.

US 7 591 572 B1 discloses a lighting device. The lighting device can include a base, a light source housing, and a connection member connected between the base and the light source housing. The lighting device also can include a rotatable mounting plate. The light source housing can be elongated and can include one or more battery-powered lighting elements, such as light-emitting diodes. The lighting device can be convertible between a compact configuration and an expanded configuration. The light source housing and the connection member together can be rotatable relative to the base around a first axis. The light source housing also can be rotatable relative to the connection member around a second axis substantially parallel to the first axis and a third axis substantially perpendicular to the first axis. Batteries to power the lighting elements can be positioned within a battery compartment of a removable battery pack within the base.

EP 1 617 138 A2 discloses a lantern having a light housing which allows a 360 DEG radiation of light, said light housing including a light source and being pivotally connected to a lantern body by a rotational means, said body being of a generally rectangular construction having said rotational means off-set from a longitudinal axis of said body, said lighting housing being able to rotate so as to cross said longitudinal axis of said body.

US 2017/130912 A1 discloses a lighting device which has a device body including an output terminal for outputting electric energy and a split-type light including at least a lighting element. The device body includes a coupling portion for detachably connecting the split-type light with the device body. The split-type light includes a built-in power supply for supplying electric energy to the lighting element and an input terminal for inputting electric energy to the split-type light. When the split-type light is connected with the device body, the output terminal is electrically connected with the input terminal.

EP 1 455 505 A1 discloses a portable terminal. In the portable terminal, a first housing (10) extends lengthwise and a hinge housing (30) is installed at an end of the first housing, for defining a first hinge axis (Al) along a width direction of the first housing and a second hinge axis (A2) perpendicular to the first hinge axis. A second housing (20) is connected to the first housing by the hinge housing, for rotating about the first hinge axis to an opened state or a closed state with respect to the first housing. A subhousing (40) has a cylindrical camera module (41) along the first hinge axis and is mounted lengthwise to the outer surface of the first housing.

### Summary of Invention

Regarding such a lighting device as described in Patent Literature 1, there is a need for a lighting device which is more easily portable while operability, such as adjustment of the angle of rotation of the light source units, is not degraded.

It is an object of the present disclosure to provide a function module having improved operability and portability. The problem is solved by the subject-matter of the independent claims. Preferred embodiments are defined in the dependent claims.

A function module according to one aspect of the present disclosure includes a function housing and an operation housing. The function housing includes a functioning section as an illuminator or a loudspeaker. The operation housing includes an operation section configured to receive an operation for operating the functioning section. The operation housing includes a first support provided at one end in a prescribed direction of the operation housing. The function housing is supported at the first support by the operation housing to be rotatable about a first rotation axis along a direction transverse to the prescribed direction and to be rotatable about a second rotation axis transverse to the first rotation axis. The function housing is configured to rotate about the first rotation axis to move between a closed position and an open position. The operation housing has a specific plane to which a battery pack is to be detachably attached in a state where the battery pack is exposed. A center of gravity of the function housing, the operation housing, and the battery pack is in the battery pack in a state where the function housing is in the open position and in the closed position. The operation section is located on an opposite surface of the operation housing from the battery pack. When the function housing is in the closed position, the operation section is covered with the operation housing.

This aspect has the advantage that the function housing is usable in the closed position and in the open position, and the battery pack is attachable and detachable, and thus, the function module with improved operability and portability can be provided. Furthermore, the function module is well-balanced in a state where the function housing is in the open position and in the closed position and is less likely to tip over, and thus, the function module with improved operability can be provided. Additionally, when the operation section is operated, the battery pack does not obstruct the handle, and thus, the function module with improved operability can be provided.

### Brief Description of Drawings

FIG. 1 is a perspective view illustrating an embodiment (first embodiment) of a function module according to the present disclosure;
FIG. 2 is a perspective view illustrating the embodiment of the function module;
FIG. 3 is a perspective view illustrating the embodiment of the function module;
FIG. 4 is a plan view illustrating the embodiment of the function module;
FIG. 5 is a side view illustrating the embodiment of the function module;
FIG. 6 is a front view illustrating the embodiment of the function module;
FIG. 7 is a bottom view illustrating the embodiment of the function module;
FIG. 8 is a perspective view illustrating the embodiment of the function module;
FIG. 9 is a perspective view illustrating the embodiment of the function module;
FIG. 10 is a plan view illustrating the embodiment of the function module; and
FIG. 11 is a perspective view illustrating an embodiment (second embodiment) of a
function module according to the present disclosure.

### Description of Embodiments

### (First Embodiment)

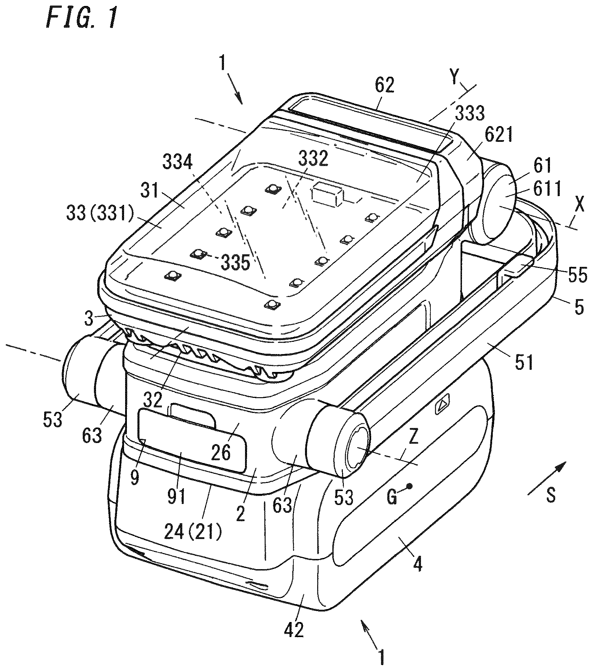

With reference to FIGS. 1 to 10, a function module 1 of the present embodiment will be described below.

As illustrated in FIG. 1 the function module 1 according to the present disclosure includes a function housing 3 and an operation housing 2. The function module 1 shown in FIG. 1 is provided with a battery pack 4. The function module 1 according to the present embodiment further includes a handle 5. The function module 1 is not limited to this embodiment but can be various types of apparatuses having portability and transportability.

The function housing 3 includes a functioning section 33 configured to perform a main function of the function module 1. In the present embodiment, the functioning section 33 is an illuminator 331. Thus, the function module 1 according to the present embodiment is a lighting device. The function housing 3 has a first surface 31 and a second surface 32 on both sides in a thickness direction of the function housing 3. The function housing 3 further includes the illuminator 331 whose light-emitting surface is the first surface 31. That is, the light-emitting surface of the illuminator 331 is the first surface 31 which is one of the both surfaces in the thickness direction of the function housing 3. The illuminator 331 outputs light from the first surface 31. The first surface 31 and the second surface 32 are rectangular.

The illuminator 331 includes a light source unit 332 and a light transmitting plate 333. The light source unit 332 includes: a metal substrate 334 made of, for example, aluminum or the like; and a plurality of light emitting diode (LED) modules 335. The light source unit 332 is supplied with electric power from the battery pack 4 to emit light. The light transmitting plate 333 has transparency such that the light emitted from the light source unit 332 is transmitted. The light transmitting plate 333 is attached to the function housing 3 to form the first surface 31. The light source unit 332 is accommodated in the function housing 3 at a location corresponding to the light transmitting plate 333.

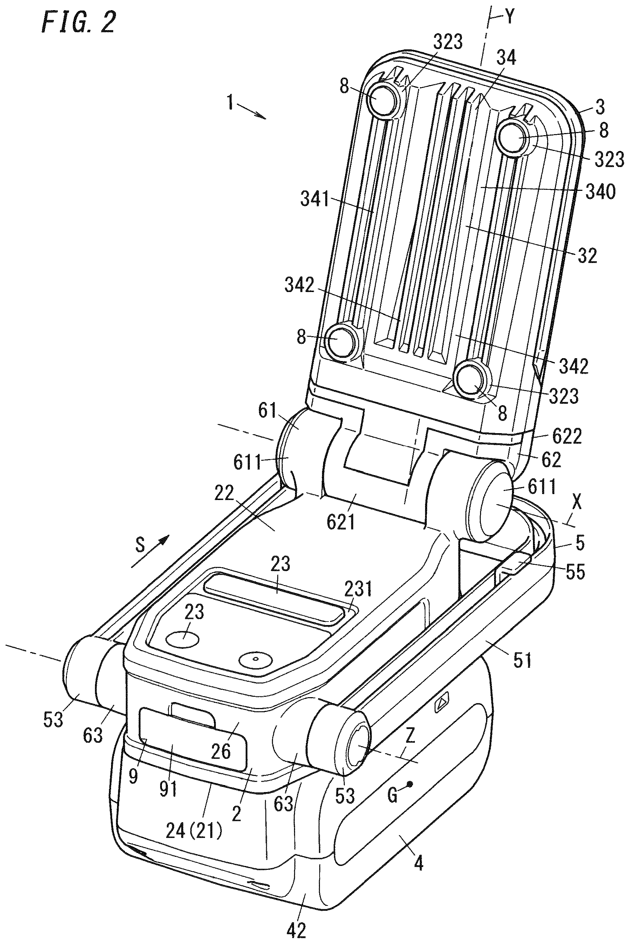

As illustrated in FIG. 2, the second surface 32 of the function housing 3 is provided with a heat dissipator 34 which is to be thermally coupled to the illuminator 331. That is, the second surface 32 on an opposite side from the first surface 31 in the thickness direction of the function housing 3 is the heat dissipator 34 to which heat generated from the illuminator 331 is transmitted and which is configured to dissipate the heat. In the function module 1 according to the present embodiment, the heat dissipator 34 facilitates dissipation of heat generated from the light source unit 332 of the illuminator 331, which enables the thermal degradation of the light source unit 332 to be reduced. Examples of the thermal coupling between the illuminator 331 and the heat dissipator 34 include a coupling mode in which the illuminator 331 and the heat dissipator 34 are in contact with each other, a mode in which the illuminator 331 and the heat dissipator 34 face each other with a gap therebetween, and a mode in which a thermally conductive member is present between the illuminator 331 and the heat dissipator 34.

The heat dissipator 34 has an uneven shape 340 formed on the second surface 32. That is, the heat dissipator 34 has the uneven shape 340 including a recess 341 and a projection 342 formed on the second surface 32. The recess 341 is recessed with respect to the projection 342 in the thickness direction of the function housing 3. That is, the projection 342 protrudes beyond the recesses 341 in the thickness direction of the function housing 3. When the heat dissipator 34 has the uneven shape formed on the second surface 32, the surface area of the heat dissipator 34 can be increased, and the heat dissipation characteristic of the heat dissipator 34 can be improved as compared to a case where the heat dissipator 34 has no uneven shape. The heat dissipator 34 preferably includes a plurality of the recesses 341 and a plurality of the projections 342. In the heat dissipator 34 including the plurality of recesses 341 and the plurality of projections 342, the surface area of the heat dissipator 34 can be increased, and the heat dissipation characteristic of the heat dissipator 34 can be improved as compared to a case of a single recess 341 and a single projection 342.

The uneven shape 340 includes a linear part extending in a direction orthogonal to a first rotation axis X. That is, the heat dissipator 34 has the uneven shape 340 which is linear and which extends in the direction orthogonal to the first rotation axis X. The function housing 3 rotates, as described later, about the first rotation axis X, thereby moving between a closed position and an open position, and the uneven shape 340 has the recess 341 and the projection 342 which extend in a direction orthogonal to the first rotation axis X. The uneven shape 340 is formed on the second surface 32, and thus, the uneven shape 340 can reinforce the second surface 32 of the function housing 3. Thus, the strength of the function housing 3 can be improved. In addition, since the uneven shape 340 extends in the direction orthogonal to the first rotation axis X, force applied to the function housing 3 is easily dispersed in a direction orthogonal to the rotation direction of the function housing 3 when the function housing 3 is rotated about the first rotation axis X. Thus, the uneven shape 340 enables reinforcement effect of reinforcing the function housing 3 to be improved.

The operation housing 2 includes an operation section 23 for operation of the functioning section 33. In the function module 1 according to the present embodiment, since the functioning section 33 is the illuminator 331, the illuminator 331 is operated via the operation section 23. For example, an operation given to the operation section 23 enables the illuminator 331 to be turned on, off, and dimmed. The operation housing 2 accommodates a circuit unit including a lighting circuit configured to turn on the light source unit and a controller configured to control the lighting circuit.

The operation section 23 is located on an opposite surface of the operation housing 2 from the battery pack 4. That is, the operation section 23 is exposed on a surface opposite from a specific plane 24 of the operation housing 2, the battery pack 4 being to be attached to the specific plane 24. As described later, the specific plane 24 is a first surface 21 in a thickness direction of the operation housing 2. Thus, the operation section 23 is located on a second surface 22 in the thickness direction of the operation housing 2. That is, the operation section 23 is provided on the second surface 22 of the operation housing 2 which faces the second surface 32 of the function housing 3 in a state where the function housing 3 is in the closed position. Thus, in the state where the function housing 3 is in the closed position, the operation section 23 is covered with the operation housing 2 and is thus difficultly operated, but in a state where the function housing 3 is in the open position, the operation section 23 is not covered with the operation housing 2 and is thus easily operated. Note that the "closed position" and the "open position" will be described later.

Examples of the operation section 23 include a push button and a touch panel.

The operation section 23 is provided in a recess 231 formed on the opposite surface of the operation housing 2 from the battery pack 4. That is, operation section 23 is provided in the recess 231 formed in the second surface 22 of the operation housing 2. The operation section 23 is exposed in the recess 231. The recess 231 is recessed with respect to a portion other than the recess 231 in the second surface 22. Thus, as compared to a case where the operation section 23 is provided on the portion other than the recess 231 in the second surface 22, the operation section 23 is less likely to be unexpectedly touched by, for example, a hand of a person or an object. Thus, the operation section 23 is less likely to be accidentally operated, and, for example, when the function housing 3 is rotated about the first rotation axis X, erroneous operation of the operation section 23 is reduced.

The operation housing 2 has one end in a prescribed direction S provided with a first support 61. In other words, one direction of directions transverse to the thickness direction of the operation housing 2 is defined as the prescribed direction S, and the first support 61 is located at one end of the operation housing 2 in the prescribed direction S. The first support 61 includes a plurality of (e.g., two) couplers 611. The plurality of couplers 611 protrudes at the one end of the operation housing 2. Moreover, the plurality of couplers 611 are aligned in a direction along the first rotation axis X at the one end of the operation housing 2. Thus, the plurality of couplers 611 face each other in a direction along the first rotation axis X at the one end of the operation housing 2.

The function housing 3 is supported on the operation housing 2 by the first support 61 in a state where the function housing 3 is rotatable about the first rotation axis X along a direction transverse to the prescribed direction S. That is, the first support 61 of the operation housing 2 supports the function housing 3, and the function housing 3 is in the state where the function housing 3 is rotatable about the first rotation axis X along the direction transverse to the prescribed direction S.

The function housing 3 is supported by the operation housing 2 via a second support 62. That is, the second support 62 is attached to the first support 61, and the operation housing 2 is attached to the second support 62. The second support 62 is attached to the first support 61 to be rotatable about the first rotation axis X. Thus, along rotation of the second support 62 about the first rotation axis X with respect to the first support 61, the function housing 3, together with the second support 62, also rotates about the first rotation axis X with respect to the first support 61.

The second support 62 includes a shaft 621 which is to be attached to the first support 61 and a base 622 to which the function housing 3 is to be attached. The shaft 621 has a cylindrical shape elongated in a direction along the first rotation axis X. The shaft 621 protrudes at one end of the base 622, and on an opposite side from a protrusion direction in which the shaft 621 protrudes from the base 622, the function housing 3 is attached to the base 622. The shaft 621 is disposed between the plurality of couplers 611 facing each other. Moreover, the shaft 621 has both end each connected to a corresponding one of the couplers 611 to be rotatable about the first rotation axis X. That is, the function housing 3 and the operation housing 2 are connected to each other via a hinge mechanism including the first support 61 and the second support 62.

The function housing 3 rotates about the first rotation axis X, thereby moving between a closed position and an open position. That is, the function housing 3 is rotatable about the first rotation axis X between a state where the function housing 3 is in the closed position (see FIG. 1) and a state where the function housing 3 is in the open position (see FIG. 2). Here, the "closed position" is, as illustrated in FIG. 1, a position in which the function housing 3 overlaps the operation housing 2 in the thickness direction of the function housing 3. That is, the "closed position" is a position achieving a state where the second surface 32 of the function housing 3 faces the second surface 22 of the operation housing 2 in the thickness direction of the function housing 3. That is, in a state where the thickness direction of the function housing 3 coincides with the thickness direction of the operation housing 2, a state is achieved where the function housing 3 is in the closed position with respect to the operation housing 2. Thus, when the function housing 3 rotates about the first rotation axis X to reach the closed position, a state is achieved where the second surface 32 and the second surface 22 face each other in the thickness direction of the function housing 3. Moreover, the "open position" is, as illustrated in FIG. 2, a position in which a state is achieved where the function housing 3 and the operation housing 2 do not overlap each other in the thickness direction of the function housing 3. That is, the "open position" is a position achieving a state where the second surface 32 of the function housing 3 does not face the second surface 22 of the operation housing 2 in the thickness direction of the function housing 3. That is, in a state where the thickness direction of the function housing 3 does not coincide with the thickness direction of the operation housing 2, a state is achieved where the function housing 3 is in the open position with respect to the operation housing 2. Thus, when the function housing 3 rotates about the first rotation axis X to reach the open position, a state is achieved where the second surface 32 and the second surface 22 do not face each other in the thickness direction of the function housing 3.

In the function module 1 according to the present embodiment, the open position of the function housing 3 is determined such that the angle between the second surface 32 of the function housing 3 and the second surface 22 of the operation housing 2 is 270 degrees at the maximum. In the function module 1 according to the present embodiment, a plurality of open positions of the function housing 3 are stepwise determined. For example, for the open position of the function housing 3, open positions, namely, 36 degrees, 72 degrees, 90 degrees, 120 degrees, 180 degrees, and 270 degrees, are stepwise determined for the angle between the second surface 32 of the function housing 3 and the second surface 22 of the operation housing 2. As described above, the first support 61 and the second support are couple to each other such that the function housing 3 is held at the plurality of open positions. The second support is preferably coupled via, for example, a notch structure to the first support 61 such that the function housing 3 is held at the plurality of open positions.

In the function module 1 according to the present embodiment, rotating the function housing 3 about the first rotation axis X enables the orientation of the function housing 3 to be changed, along which the orientation of the illuminator 331 can also be changed. Thus, in the function module 1 according to the present embodiment, a light irradiation direction from the light irradiation area of the illuminator 331 around the first rotation axis X can be changed to change a direction in which light brightly shines.

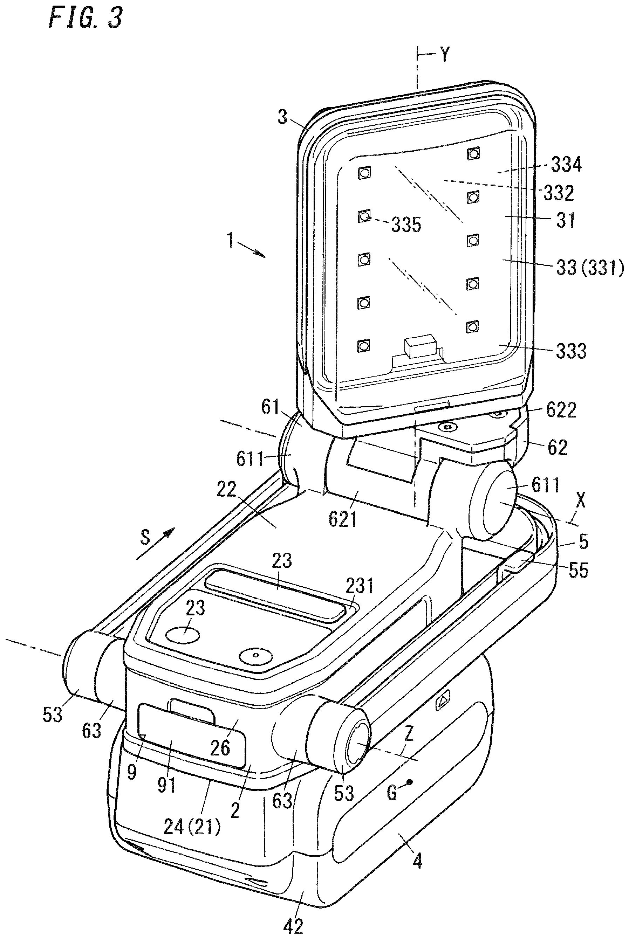

As illustrated in FIG. 3, the function housing 3 is supported by the operation housing 2 in a state where the function housing 3 is rotatable about a second rotation axis Y transverse to the first rotation axis X. That is, the operation housing 2 supports the function housing 3 in a state where the function housing 3 is rotatable about the first rotation axis X and also in a state where the function housing 3 is rotatable about the second rotation axis Y. Thus, the function housing 3 is rotatable about both the first rotation axis X and the second rotation axis Y with respect to the operation housing 2.

The second rotation axis Y is provided to the second support 62 rotatably attached to the operation housing 2 via the first support 61. That is, the second support 62 is attached to the first support 61 provided to the operation housing 2 to be rotatable about the first rotation axis X, and the second support 62 has the second rotation axis Y. The function housing 3 has one end attached to the base 622, and thus, the function housing 3 is supported by the second support 62. Therefore, the one end of the function housing 3 is attached to the base 622 to be rotatable about the second rotation axis Y. In the function module 1 according to the present embodiment, a plurality of angles of rotation of the function housing 3 rotatable about the second rotation axis Y are stepwise determined. For example, the angles of rotation of the function housing 3 are stepwise held such that the orientation of the functioning section 33 of the function housing 3 is at, for example, 36 degrees, 72 degrees, 90 degrees, 120 degrees, and 180 degrees with respect to the prescribed direction S. In this case, similarly to the first support 61, the second support 62 is also provided with a notch mechanism.

In the function module 1 according to the present embodiment, rotating the function housing 3 about the second rotation axis Y enables the orientation of the function housing 3 to be changed, along which the orientation of the illuminator 331 can also be changed. Thus, in the function module 1 according to the present embodiment, a light irradiation direction from the light irradiation area of the illuminator 331 around the second rotation axis Y can be changed to change a direction in which light brightly shines.

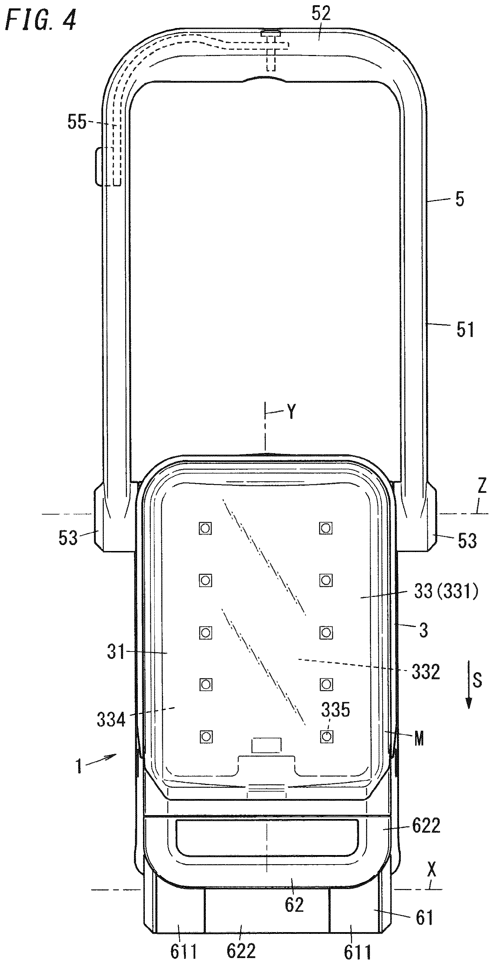

As illustrated in FIG. 4, in the function module 1 according to the present embodiment, the operation housing 2 fits inside a projection plane M of the function housing 3 in plan view in a state where the function housing 3 is in the closed position. The projection plane M is rectangular. That is, in a state where the function housing 3 and the operation housing 2 overlap each other in the thickness direction of the function housing 3, the second surface 22 of the operation housing 2 is inside the projection plane M of the function housing 3 when the function module 1 is viewed from the first surface 31 of the function housing 3. Thus, in a state where the function housing 3 is in the closed position, a state is achieved where the second surface 22 of the operation housing 2 is covered with the function housing 3 and is thus not exposed.

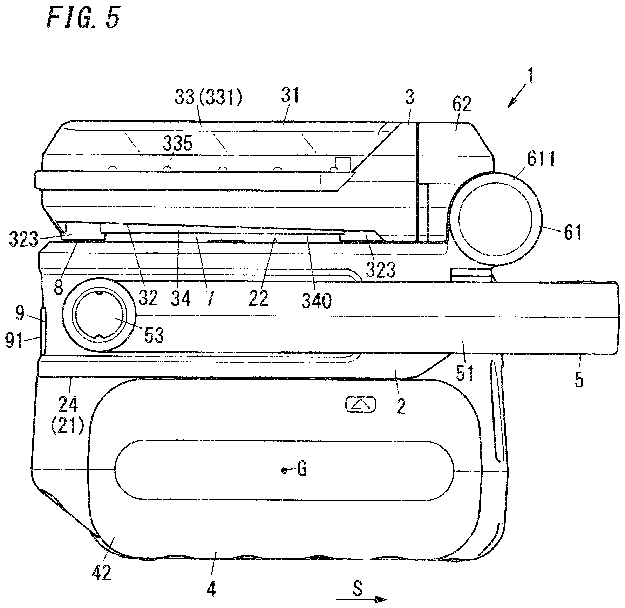

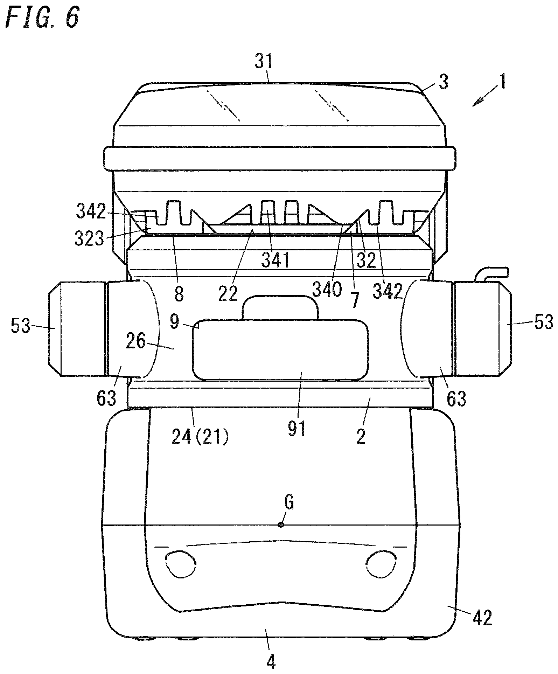

As illustrated in FIGS. 5 and 6, the function module 1 according to the present embodiment has a gap 7 between the heat dissipator 34 and the operation housing 2 in a state where the function housing 3 is in the closed position. That is, the function housing 3 overlaps the operation housing 2 in the thickness direction of the function housing 3 such that the gap 7 is formed between the heat dissipator 34 and the operation housing 2. When the heat dissipator 34 has the uneven shape 340, the gap 7 is formed between a tip end of the projection 342 of the heat dissipator 34 and the second surface of the operation housing 2. That is, the gap 7 is between the second surface 32 and the second surface 22 in a state where the second surface 32 of the function housing 3 including the heat dissipator 34 faces the second surface 22 of the operation housing 2.

Also in a state where the function housing 3 is in the closed position, the gap 7 makes it difficult for heat to be transmitted from the heat dissipator 34 to the second surface 22 of the operation housing 2. Thus, heat is easily released through the gap 7 to the outside of the function module 1, and therefore, heat dissipation characteristic derived from the heat dissipator 34 is less likely to be degraded, and the influence of heat generated from the illuminator 331 over the operation housing 2 and/or the battery pack 4 can be reduced.

The function module 1 according to the present embodiment has elastic bodies 8 between the heat dissipator 34 and the operation housing 2 in a state where the function housing 3 is in the closed position. That is, the function housing 3 overlaps the operation housing 2 in the thickness direction of the function housing 3 such that the elastic bodies 8 are located between the heat dissipator 34 and the operation housing 2. Thus, in a state where the second surface 32 of the function housing 3 and the second surface 22 of the operation housing 2 face each other in the thickness direction of the function housing 3, the elastic bodies 8 are located between the second surface 32 of the function housing 3 and the second surface 22 of the operation housing 2.

Examples of the elastic body 8 include rubber, elastomer, plastic, and a spring. The second surface 32 of the function housing 3 has a plurality of holders 323. Each of the holders 323 is provided at a corresponding one of four corners of the second surface 32. Each holder 323 has a cylindrical shape protruding from the second surface 32. In each holder 323, a corresponding one of the elastic bodies 8 is fitted in, and thereby, the plurality of elastic bodies 8 are provided in the second surface 32. Each elastic body 8 has a tip end surface protruding slightly beyond a tip end surface of the heat dissipator 34. Thus, in a state where the function housing 3 is in the closed position, a state is achieved where the tip end surfaces of the elastic bodies 8 protrude toward the second surface 22 of the operation housing 2 beyond the tip end surface of the heat dissipator 34. Thus, the gap 7 is formed between the heat dissipator 34 and the operation housing 2 due to the elastic bodies 8 located between the heat dissipator 34 and the operation housing 2. That is, the gap 7 dimensioned such that the tip end surfaces of the elastic body 8 protrude beyond the tip end surface of the heat dissipator 34 is formed between the heat dissipator 34 and the second surface 22 of the operation housing 2.

In the function module 1 according to the present embodiment, the battery pack 4 is a battery pack for a power tool. That is, the battery pack 4 is, for example, a battery pack used in a power tool including a motor of an electric wrench, an electric screw driver, an electric drill, and the like. As the battery pack 4, for example, a housing body 42 in which a plurality of lithium ion batteries are connected to each other in series is used. The battery pack 4 has a rated voltage of, 14 V, 18 V, or the like.

In the function module 1 according to the present embodiment, the battery pack 4 is detachably attached with the battery pack 4 being exposed at the specific plane 24 of the operation housing 2. That is, the battery pack 4 is detachably attached to the specific plane 24 of the operation housing 2, and in a state where the battery pack 4 is attached to the specific plane 24, the battery pack 4 is not fully covered with the operation housing 2 and is thus partially exposed. The specific plane 24 is the first surface 21 of the operation housing 2. That is, the specific plane 24 is an opposite surface from the second surface 22 in a thickness direction of the operation housing 2. In the function module 1 according to the present embodiment, the function module 1 is carriable with the battery pack 4 being in a detached state and thus has excellent portability.

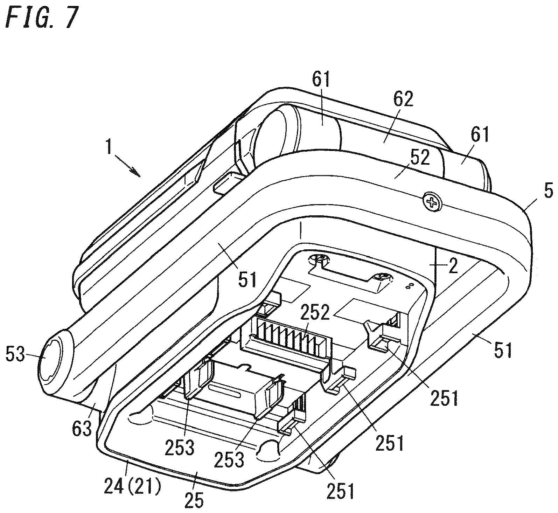

As illustrated in FIG. 7, the specific plane 24 has a recess 25 to which the battery pack 4 is to be attached. The recess 25 is provided with three hooks 251 each having an L-shape. The hooks 251 are engaged with respective hooks of the battery pack 4. The recess 25 is further provided with a communication connector 252 and two power supply terminals 253. The communication connector 252 is connectable to a communication connector of the battery pack 4. The two power supply terminals 253 are connected to connection terminals of the battery pack 4 by plug connection.

When the battery pack 4 is attached to the operation housing 2, part of the battery pack 4 is inserted into the recess 25 such that the hooks of the battery pack 4 do not interfere the hooks 251 of the recess 25. Then, the battery pack 4 is shifted in one direction, and thereby, the battery pack 4 is attachable to the recess 25. When the battery pack 4 is attached to the recess 25, the hooks of the battery pack 4 are engaged with the hooks 251 of the recess 25. Moreover, a lock section of the battery pack 4 locks the hooks 251 engaged with the hooks of the battery pack 4.

When the battery pack 4 is detached from the operation housing 2, for example, an unlock operation section 41 provided to the battery pack 4 is operated to shift the battery pack 4 in a direction opposite to the one direction, and then, the battery pack 4 is moved in a direction away from the recess 25.

In the function module 1 according to the present embodiment, the center of gravity G of the function housing 3, the operation housing 2, and the battery pack 4 is in the battery pack 4 in a state where the function housing 3 is in the open position. That is, when the function housing 3 and the operation housing 2 are located not to overlap each other in the thickness direction of the function housing 3, the center of gravity G of the function housing 3, the operation housing 2, and the battery pack 4 is on the battery pack 4. The center of gravity G is in the battery pack 4 also when the open position of the function housing 3 corresponds to the maximum angle between the second surface 32 of the function housing 3 and the second surface 22 of the operation housing 2. Thus, when the function module 1 according to the present embodiment is used in a state where the function module 1 is placed with the battery pack 4 facing down, the function module 1 can be used in a state where the function module 1 hardly tips over even if some force is applied to the function module 1.

Moreover, the center of gravity G of the function housing 3, the operation housing 2, and the battery pack 4 is in the battery pack 4 in a state where the function housing 3 is in the closed position. That is, also when the function housing 3 and the operation housing 2 are located to overlap each other in the thickness direction of the function housing 3, the center of gravity G of the function housing 3, the operation housing 2, and the battery pack 4 is in the battery pack 4. That is, in the function module 1 according to the present embodiment, the center of gravity G is in the battery pack 4 both in a state where the function housing 3 is in the open position and in a state where the function housing 3 is in the closed position.

The function module 1 according to the present embodiment further includes a power supply port 9 for supplying electric power to the battery pack 4. That is, the function module 1 according to the present embodiment is configured to supply electric power of the battery pack 4 via the power supply port 9 to another electric appliance. The power supply port 9 is, for example, USB connector. Electrically connecting a cable to the power supply port 9 enables electric power to be supplied to another electric appliance.

The power supply port 9 is provided in an end surface 26 on an opposite side from the first support 61 in the prescribed direction S of the operation housing 2. That is, the power supply port 9 is provided to the end surface 26 of the operation housing 2. The end surface 26 is not provided with the first support 61 to be connected to the second support 62 which supports the function housing 3. The power supply port 9 is provided to the end surface 26 which is not provided with the first support 61. Therefore, when a cable is attached to the power supply port 9 and when the cable is detached from the power supply port 9, attaching and detaching of the cable is less likely to be obstructed by the first support 61, and the attaching and the detaching of the cable is thus easily performed.

The power supply port 9 is recessed in the end surface 26 and is closed with a lid 91 when the power supply port 9 is not used. To use the power supply port 9, the lid 91 is opened to expose a connector in the power supply port 9, and a cable is connected to the connector.

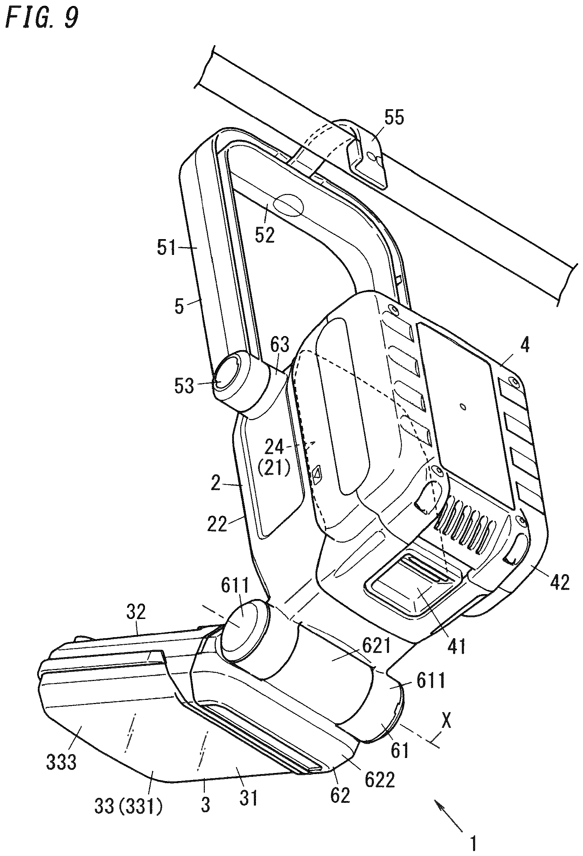

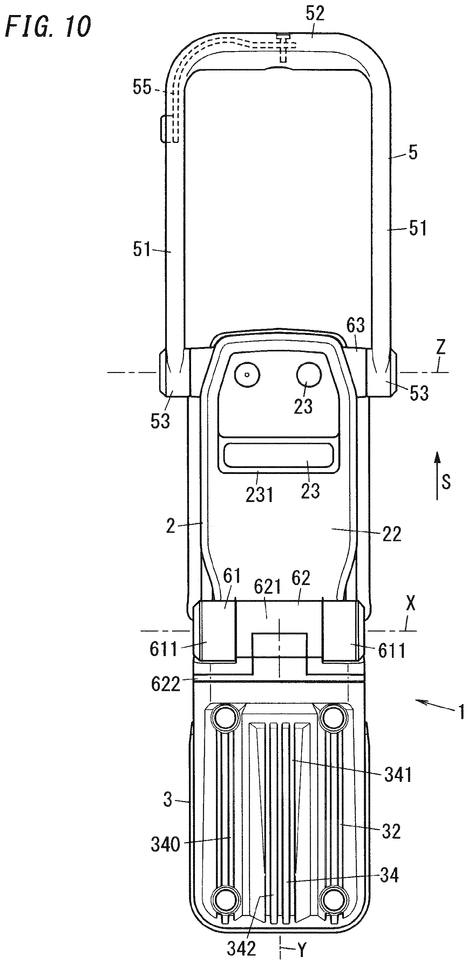

As illustrated in FIGS. 9 and 10, the function module 1 of the present embodiment further includes the handle 5 via which the function housing 3 and the operation housing 2 are hung and held on, for example, a bar on a wall. That is, the function housing 3 and the operation housing 2 are hung and held by the handle 5. Thus, the function module 1 according to the present embodiment is usable not only in a state where the function module 1 is placed with the battery pack 4 facing down but also in a state where the handle 5 is hung on a wall or from a ceiling. The handle 5 is used not only by being hung but also by being held by hand. Holding the handle 5 by hand enables portability and transportability to be improved. Moreover, as illustrated in FIG. 9, the handle 5 is provided with a hook 55 for suspending the handle 5.

The handle 5 includes a plurality of (e.g., two) arms 51 and a hanging part 52 provided between ends of the arms 51 on one side, and the handle 5 has a frame shape with one side being open. At a tip end of each arm 51 (at an end on an opposite side from the hanging part 52), a connector 53 which is cylindrical is provided. Each connector 53 is rotatably coupled to a corresponding one of two third supports 63 provided to the operation housing 2.

The handle 5 is rotatably attached to the operation housing 2 via the third supports 63 at an opposite end of the operation housing 2 from the first support 61. That is, the handle 5 is attached to the third support 63 to be rotatable about a third rotation axis Z extending through the third supports 63. The first rotation axis X and the third rotation axis Z are parallel to each other. Moreover, the third supports 63 are provided at an opposite end of the operation housing 2 from the first support 61, that is, at an end provided with the end surface 26 to protrude beyond side surfaces of the operation housing 2 (side surfaces facing each other in a direction along the third rotation axis Z).

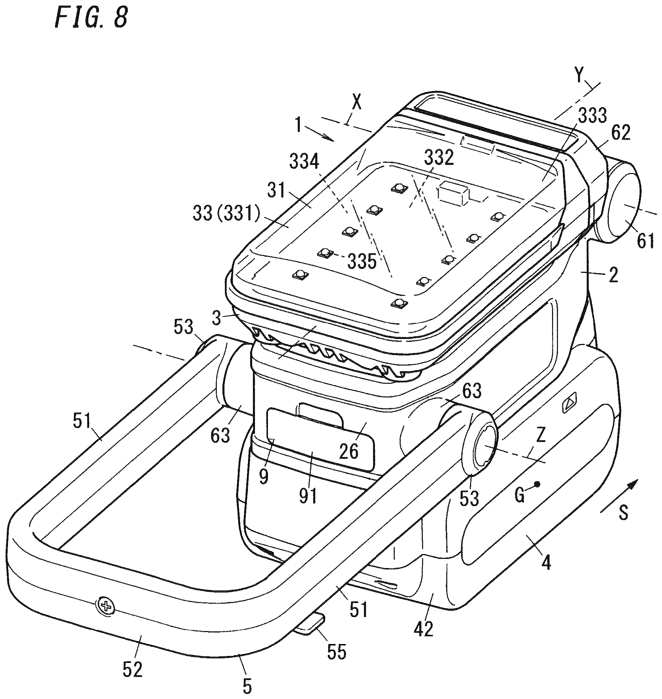

In a state where the function housing 3 is in the closed position, the handle 5 is rotatable on an opposite side from the battery pack 4. That is, also when the function housing 3 and the operation housing 2 are located to overlap each other in the thickness direction of the function housing 3, the handle 5 is rotatable on a side where the function housing 3 and the operation housing 2 are provided. That is, as illustrated in FIG. 1, when the handle 5 is rotated to move upward with the function housing 3 being in the closed position, the handle 5 rotates such that the hanging part 52 of the handle 5 passes through a side where the function housing 3 is provided (e.g., above the function housing 3). Then, in a state where the function housing 3 is in the closed position as shown in FIG. 8, the handle 5 protrudes in the prescribed direction S.

The function module 1 according to the present embodiment can change the state of the handle 5 from a state where the handle 5 protrudes in the prescribed direction S to a state where the handle 5 protrudes on an opposite side from the prescribed direction S and vice versa with the function housing 3 being in the closed position, that is, in a compact form. Thus, the function module 1 according to the present embodiment is convenient to use.

### (Variation)

The first embodiment is one of the various embodiments of the present disclosure.

The illuminator 331 is not limited to the light emitting unit including LEDs but may be a light emitting unit including, for example, organic electroluminescent elements.

The light transmitting plate 333 may include a lens.

Examples of the battery pack 4 include battery packs of various capacities for power tools.

The uneven shape 340 is not limited to the linear shape but may be a lattice shape or a wave shape.

Not only the first support 61 and the second support 62 but also the third supports 63 may be provided with the notch mechanism, and in this case, the handle 5 can be held at a position rotated by a prescribed angle.

When the amount of heat generation from the functioning section 33 is small, the heat dissipator 34 may be omitted.

### (Second Embodiment)

In a function module 10 according to the present embodiment, the configuration of a functioning section 33 is different from that of the functioning section 33 in the function module 1 of the first embodiment.

In the following description, components similar to those in the first embodiment are denoted by the same reference signs as those in the first embodiment, and the description thereof is accordingly omitted.

The configuration described in the second embodiment is accordingly applicable in combination with the configuration (including variations) described in the first embodiment.

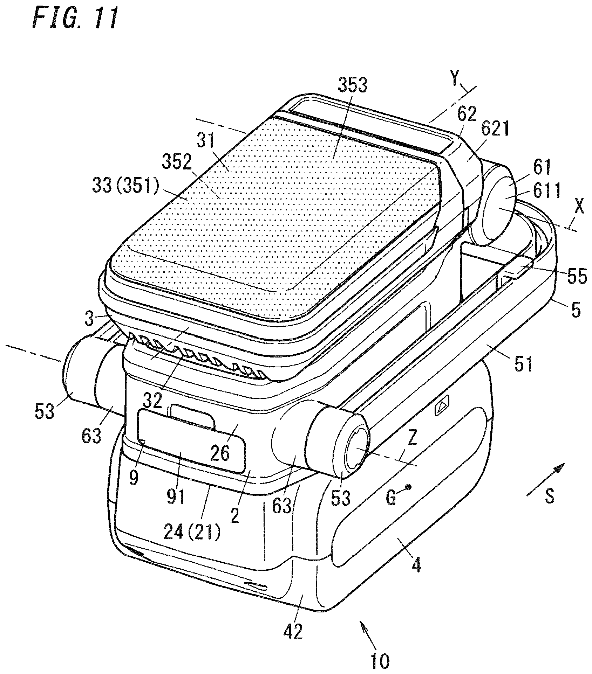

The function module 10 according to the present embodiment shown in FIG. 11 includes the functioning section 33 formed as a loudspeaker 351. That is, the function module 10 according to the present embodiment is a loudspeaker apparatus. For the loudspeaker 351, a first surface 31 of both surfaces in a thickness direction of a function housing 3 is configured as a sound outgoing surface.

The loudspeaker 351 includes a loudspeaker body 352 and an outer surface plate 353. Examples of the loudspeaker body 352 include various types of loudspeakers including such as a cone-type loudspeaker, a horn-type loudspeaker, and a dome-type loudspeaker. The outer surface plate 353 has a sound permeability for transmission of a sound from the loudspeaker body 352. The outer surface plate 353 is attached to the function housing 3 to form the first surface 31. The loudspeaker body 352 is accommodated in the function housing 3 at a location corresponding to the outer surface plate 353.

To the function module 10 according to the present embodiment, a sound may be input via a wired connection or a wireless connection. In the case of the wireless connection, Bluetooth (registered trademark), Wi-Fi (registered trademark), specific low-power radio, or the like is usable.

In a function module (1, 10) of a second aspect referring to the first aspect (disclosed in par.[0005]), the second rotation axis (Y) is provided to a second support (62) rotatably attached to the operation housing (2) via the first support (61).

This aspect has the advantage that the function housing (3) is rotatable about the second rotation axis (Y), and thus, the function module (1, 10) with improved operability and portability can be provided.

A function module (1, 10) of a third aspect referring to the first or second aspect further includes a handle (5) configured to hang and hold the function housing (3) and the operation housing (2).

This aspect has the advantage that the function housing (3) and the operation housing (2) can be hung and held on various types of members or sites by the handle (5), and thus, the function module (1, 10) with improved operability and portability can be provided..

In a function module (1, 10) of a fourth aspect referring to the third aspect, the handle (5) is rotatably attached to the operation housing (2) via a third support (63) at an opposite end of the operation housing (2) from the first support (61).

This aspect has the advantage that when the handle (5) is rotated, the first support (61) is less likely to obstruct the handle (5), and thus, the function module (1, 10) with improved operability can be provided.

In a function module (1, 10) of a fifth aspect referring to the third or fourth aspect, in a state where the function housing (3) is in the closed position, the handle (5) is rotatable on an opposite side from the battery pack (4).

This aspect has the advantage that when the handle (5) is rotated, the battery pack (4) does not obstruct the handle (5), and thus, the function module (1, 10) with improved operability and portability can be provided.

In a function module (1, 10) of a sixth aspect referring to any one of the first to fifth aspects, in a state where the function housing (3) is in the closed position, the operation housing (2) is within a projection plane (M) of the function housing (3) when viewed in plan.

This aspect has the advantage that the function module (1, 10) which has improved portability and which is compact can be provided.

A function module (1, 10) of an seventh aspect referring to any one of the first to sixth aspects further includes a power supply port (9) configured to supply electric power to the battery pack (4).

This aspect has the advantage that the function module (1, 10) configured to supply electric power to another electric appliance can be provided.

In a function module (1, 10) of a eighth aspect referring to the seventh aspect, the power supply port (9) is provided in an end surface (26) on an opposite side from the first support (61) in the prescribed direction (S) of the operation housing (2).

This aspect has the advantage that when the power supply port (9) is operated, the first support (61) is less likely to obstruct the handle (5), and thus, the function module (1, 10) with improved operability can be provided.

In a function module (1, 10) of a ninth aspect referring to any one of the first to eighth aspects, the battery pack (4) is a battery pack for a power tool.

This aspect has the advantage that the function module (1, 10) can be provided in which various types of battery packs (4) are usable and which is thus convenient to use.

### Reference Signs List

- 1: FUNCTION MODULE
- 10: FUNCTION MODULE
- 2: OPERATION HOUSING
- 3: FUNCTION HOUSING
- 4: BATTERY PACK
- 5: HANDLE
- 9: POWER SUPPLY PORT
- 23: OPERATION SECTION
- 24: SPECIFIC PLANE
- 26: END SURFACE
- 33: FUNCTIONING SECTION
- 61: FIRST SUPPORT
- 63: THIRD SUPPORT
- 62: SECOND SUPPORT
- X: FIRST ROTATION AXIS
- Y: SECOND ROTATION AXIS
- M: PROJECTION PLANE
- S: PRESCRIBED DIRECTION

## Claims

1. A function module (1, 10) comprising:
a function housing (3) including a functioning section (33) as an illuminator or a loudspeaker; and
an operation housing (2) including an operation section (23) configured to receive an operation for operating the functioning section (33),
the operation housing (2) including a first support (61) provided at one end in a prescribed direction (S) of the operation housing (2),
the function housing (3) being supported at the first support (61) by the operation housing (2) to be rotatable about a first rotation axis (X) along a direction transverse to the prescribed direction (S) and to be rotatable about a second rotation axis (Y) transverse to the first rotation axis (X),
the function housing (3) being configured to rotate about the first rotation axis (X) to move between a closed position and an open position,
the operation housing (2) having a specific plane (24) to which a battery pack (4) is to be detachably attached in a state where the battery pack (4) is exposed,
wherein a center of gravity (G) of the function housing (3), the operation housing (2), and the battery pack (4) is in the battery pack (4) in a state where the function housing (3) is in the open position and in the closed position,
wherein the operation section (23) is located on an opposite surface of the operation housing (2) from the battery pack (4), and
wherein when the function housing (3) is in the closed position, the operation section (23) is covered with the operation housing (2).

2. The function module (1, 10) of claim 1, wherein
the second rotation axis (Y) is provided to a second support (62) rotatably attached to the operation housing (2) via the first support (61).

3. The function module (1, 10) of claim 1 or 2 further comprising
a handle (5) via which the function housing (3) and the operation housing (2) are hung and held.

4. The function module (1, 10) of claim 3, wherein
the handle (5) is rotatably attached to the operation housing (2) via a third support (63) at an opposite end of the operation housing (2) from the first support (61).

5. The function module (1, 10) of claim 3 or 4, wherein
in a state where the function housing (3) is in the closed position, the handle (5) is rotatable on an opposite side from the battery pack (4).

6. The function module (1, 10) of any one of claims 1 to 5, wherein
in a state where the function housing (3) is in the closed position, the operation housing (2) is within a projection plane (M) of the function housing (3) when viewed in plan.

7. The function module (1, 10) of any one of claims 1 to 6, further comprising a power supply port (9) configured to supply electric power to the battery pack (4).

8. The function module (1, 10) of claim 7 wherein
the power supply port (9) is provided in an end surface (26) on an opposite side from the first support (61) in the prescribed direction (S) of the operation housing (2).

9. The function module (1, 10) of any one of claims 1 to 8, wherein the battery pack (4) is a battery pack for a power tool.

## Patentansprüche

1. Ein Funktionsmodul (1, 10), das Folgendes umfasst:
ein Funktionsgehäuse (3), das einen Funktionsabschnitt (33) in Form einer Beleuchtungsvorrichtung oder eines Lautsprechers beinhaltet; und
ein Bediengehäuse (2), das einen Bedienabschnitt (23) beinhaltet, der dazu konfiguriert ist, einen Bedienvorgang zum Bedienen des Funktionsabschnitts (33) aufzunehmen,
wobei das Bediengehäuse (2) einen ersten Träger (61) beinhaltet, der an einem Ende in einer vorgegebenen Richtung (S) des Bediengehäuses (2) bereitgestellt wird,
wobei das Funktionsgehäuse (3) durch das Bediengehäuse (2) am ersten Träger (61) so gehalten wird, dass es um eine erste Drehachse (X) entlang einer Richtung quer zur vorgegebenen Richtung (S) drehbar ist und dass es um eine zweite Drehachse (Y) quer zur ersten Drehachse (X) drehbar ist,
wobei das Funktionsgehäuse (3) so konfiguriert ist, dass es sich um die erste Drehachse (X) dreht, um sich zwischen einer geschlossenen Position und einer offenen Position zu bewegen,
wobei das Bediengehäuse (2) eine bestimmte Ebene (24) aufweist, an der ein Akkupack bzw. Batteriesatz bzw. Batteriepack *(battery pack)* (4) in einem Zustand, in dem der Batteriepack (4) freiliegt, lösbar angebracht werden soll,
wobei ein Schwerpunkt (G) des Funktionsgehäuses (3), des Bediengehäuses (2) und des Batteriepacks (4) im Batteriepack (4) liegt, in einem Zustand, in dem das Funktionsgehäuse (3) in der offenen Position und in der geschlossenen Position ist,
wobei der Bedienabschnitt (23) auf einer dem Batteriepack (4) gegenüberliegenden Oberfläche des Bediengehäuses (2) angeordnet ist, und
wobei, wenn das Funktionsgehäuse (3) in der geschlossenen Position ist, der Bedienabschnitt (23) von bzw. mit dem Bediengehäuse (2) abgedeckt ist.

2. Das Funktionsmodul (1, 10) nach Anspruch 1, wobei
die zweite Drehachse (Y) an einem zweiten Träger (62) bereitgestellt wird, der über den ersten Träger (61) drehbar am Bediengehäuse (2) befestigt ist.

3. Das Funktionsmodul (1, 10) nach Anspruch 1 oder 2, das ferner Folgendes umfasst:
einen Griff (5), an dem das Funktionsgehäuse (3) und das Bediengehäuse (2) aufgehängt und gehalten werden.

4. Das Funktionsmodul (1, 10) nach Anspruch 3, wobei
der Griff (5) über eine dritte Halterung (63) an einem der ersten Halterung (61) gegenüberliegenden Ende des Bediengehäuses (2) relativ zum Bediengehäuse (2) drehbar angebracht ist.

5. Das Funktionsmodul (1, 10) nach Anspruch 3 oder 4, wobei
in einem Zustand, in dem sich das Funktionsgehäuse (3) in der geschlossenen Position befindet, der Griff (5) auf einer dem Batteriepack (4) gegenüberliegenden Seite drehbar ist.

6. Das Funktionsmodul (1, 10) nach irgendeinem der Ansprüche von 1 bis 5, wobei
in einem Zustand, in dem sich das Funktionsgehäuse (3) in der geschlossenen Position befindet, das Bediengehäuse (2) in Draufsicht innerhalb einer Projektionsebene (M) des Funktionsgehäuses (3) liegt.

7. Das Funktionsmodul (1, 10) nach irgendeinem der Ansprüche von 1 bis 6, das ferner Folgendes umfasst:
einen Stromversorgungsanschluss (9), der dazu konfiguriert ist, den Batteriepack (4) mit elektrischem Strom zu versorgen.

8. Das Funktionsmodul (1, 10) nach Anspruch 7, wobei
der Stromversorgungsanschluss (9) in einer Endfläche (26) auf einer dem ersten Träger (61) in der vorgegebenen Richtung (S) des Bediengehäuses (2) gegenüberliegenden Seite bereitgestellt wird.

9. Das Funktionsmodul (1, 10) nach irgendeinem der Ansprüche von 1 bis 8, wobei
der Batteriepack (4) ein Batteriepack für ein Elektrowerkzeug ist.

## Revendications

1. Un module de fonction (1, 10) comprenant :
un boîtier de fonction (3) incluant une section de fonctionnement (33) comme un dispositif d'éclairage ou un haut-parleur ; et
un boîtier de commande ou encore d'opération *(operation housing) (2)* incluant une section d'opération (23) configurée pour recevoir une opération de la section de fonctionnement (33),
le boîtier d'opération (2) incluant un premier support (61) prévu à une extrémité dans une direction prescrite (S) du boîtier d'opération (2),
le boîtier de fonction (3) étant soutenu par le boîtier d'opération (2) au niveau du premier support (61) pour pouvoir tourner autour d'un premier axe de rotation (X) le long d'une direction transversale à la direction prescrite (S), et pour pouvoir tourner autour d'un deuxième axe de rotation (Y) transversal au premier axe de rotation (X),
le boîtier de fonction (3) étant configuré pour tourner autour du premier axe de rotation (X) afin de faire la transition entre une position fermée et une position ouverte,
le boîtier d'opération (2) présente un plan spécifique (24) auquel un bloc-batterie (4) doit être fixé de manière amovible dans un état où le bloc-batterie (4) est exposé,
sachant qu'un centre de gravité (G) du boîtier de fonction (3), du boîtier d'opération (2) et du bloc-batterie (4) se trouve dans le bloc-batterie (4) dans un état où le boîtier de fonction (3) est en position ouverte et en position fermée,
sachant que la section d'opération (23) est située sur une surface opposée du boîtier d'opération (2) par rapport au bloc-batterie (4), et
sachant que lorsque le boîtier de fonction (3) est en position fermée, la section d'opération (23) est recouverte par le boîtier d'opération (2).

2. Le module de fonction (1, 10) d'après la revendication 1, sachant que le deuxième axe de rotation (Y) est fourni au niveau d'un deuxième support (62) fixé de manière rotative au boîtier d'opération (2) par l'intermédiaire du premier support (61).

3. Le module de fonction (1, 10) d'après la revendication 1 ou 2, comprenant en outre
une poignée (5) par laquelle le boîtier de fonction (3) et le boîtier d'opération (2) sont suspendus et maintenus.

4. Le module de fonction (1, 10) d'après la revendication 3, sachant que la poignée (5) est fixée de manière rotative par rapport au boîtier d'opération (2) par l'intermédiaire d'un troisième support (63) au niveau d'une extrémité du boîtier d'opération (2) opposée au premier support (61).

5. Le module de fonction (1, 10) d'après la revendication 3 ou 4, sachant que
dans un état où le boîtier de fonction (3) est en position fermée, la poignée (5) peut être tournée du côté opposé au bloc-batterie (4).

6. Le module de fonction (1, 10) d'après l'une quelconque des revendications de 1 à 5, sachant que
lorsque le boîtier de fonction (3) est en position fermée, le boîtier d'opération (2) se trouve à l'intérieur d'un plan de projection (M) du boîtier de fonction (3) dans une vue en plan.

7. Le module de fonction (1, 10) d'après l'une quelconque des revendications de 1 à 6, comprenant en outre
un port d'alimentation (9) configuré pour fournir de l'énergie électrique au bloc-batterie (4).

8. Le module de fonction (1, 10) d'après la revendication 7, sachant que
le port d'alimentation électrique (9) est prévu dans une surface d'extrémité (26) sur un côté opposé au premier support (61) dans la direction prescrite (S) du boîtier d'opération (2).

9. Le module de fonction (1, 10) d'après l'une quelconque des revendications de 1 à 8, sachant que
le bloc-batterie (4) est un bloc-batterie pour un outil électrique.
